# EUROPÄISCHE PATENTSCHRIFT

(11) **EP 1 269 017 B1**
(45) Veröffentlichungstag und Bekanntmachung des Hinweises auf die Patenterteilung: **06.09.2006**
(21) Anmeldenummer: 00985102.3
(22) Anmeldetag: 28.11.2000
(51) Int. Cl.: F03D 11/04

(54) **WINDENERGIEANLAGE**
WIND ENERGY PLANT
EOLIENNE

(30) Priorität: 17.03.2000 DE 20004822 U
(43) Veröffentlichungstag der Anmeldung: 02.01.2003
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2000/011867
(87) Internationale Veröffentlichungsnummer: WO 2001/069082

(56) Entgegenhaltungen:
- DE-A- 2 138 500
- DE-U- 20 006 959

## Beschreibung

Die Erfindung betrifft eine Windenergieanlage mit einem Rotor, welcher mit einem Generator innerhalb eines Maschinenhauses gekoppelt ist. Solche Windenergieanlagen sind bereits seit langem bekannt, beispielsweise die Windenergieanlagen vom Typ E-40, E-66 der Firma Enercon, Aurich.

Windenergieanlagen, insbesondere Windparks mit einer Vielzahl von Windenergieanlagen sind technisch mittlerweile so weit entwickelt, dass sie im relevanten Ausmaß zur elektrischen Energiegewinnung beitragen. Gerade Windparks und größere Einzelanlagen sind beieindruckende Bauwerke, die gerne Ziel von Besichtigungen werden (Z B. US-A- 4 008 006), zumal die Windenergie eine interessante Technologie darstellt, für die sich sehr viele Menschen interessieren.

Aufgabe der Erfindung ist es, Besichtigungsmöglichkeiten einer Windenergieanlage zu verbessern, wobei mehr Menschen als bisher solche Windenergieanlagen besichtigen können.

Die Aufgabe wird erfindungsgemäß mit einer Windenergieanlage mit den Merkmal nach Anspruch 1 gelöst. Die vorteilhafte Weiterbildung ist in den Unteransprüchen beschrieben.

Die erfindungsgemäße Windenergieanlage ist mit einer Aussichtsplattform versehen, welche unterhalb des Maschinenhauses am Turm der Windenergieanlage angeordnet ist. Diese Aussichtsplattform wird direkt am Turm befestigt und besteht aus einer oberen Trägeranordnung, bestehend aus mehreren Tragarmen und einer unteren Trägeranordnung, ebenfalls bestehend aus Tragarmen. Die Zuwegung zur Aussichtsplattform kann über Leitern, Treppen oder Aufzüge im oder am Turm erfolgen.

Die erfindungsgemäße Aussichtsplattform ist für Besucher von Windenergieanlagen, insbesondere Besucher von Windparks, äußert attraktiv, weil sie nicht nur die Besichtigung einer einzigen Anlage oder mehrerer Anlagen aus der Froschperspektive erlaubt, sondern auch einen Blick von etwa Nabenhöhe (Maschinenhaushöhe) und somit insbesondere in Gegenden ohne Hügel und Berge eine sehr attraktive Landschaftsperspektive wie auch Besichtigung der Windenergieanlage gewährleistet. Für diese Aussichtsplattform wird erfindungsgemäß eine geschlossene Lösung vorgesehen, d.h. dass die gesamte Aussichtsplattform durch Glaswände und Dächer geschlossen ist und somit der Besuch auf der Aussichtsplattform auch dann noch angenehm ist, wenn es sehr windig und sehr kalt ist.

Um einen guten Ausblick von der Aussichtsplattform zu haben, ist diese bevorzugt direkt unterhalb des Maschinenhauses angeordnet, so dass sich die Rotorblätter im Windkraftbetrieb an der Aussichtsplattform vorbei bewegen. Es ist aber auch durchaus möglich, die Aussichtsplattform so am Turm anzubringen, dass sie stets unterhalb des Rotors liegt.

Die Erfindung wird nachfolgend anhand eines in der Zeichnung näher dargestellten Beispiels erläutert. Hierin stellen dar:
- Fig. 1: eine Auf- und Einsicht in eine Aussichtsplattform,
- Fig. 2: ein Querschnitt durch die Tragkonstruktion der Aussichtsplattform,

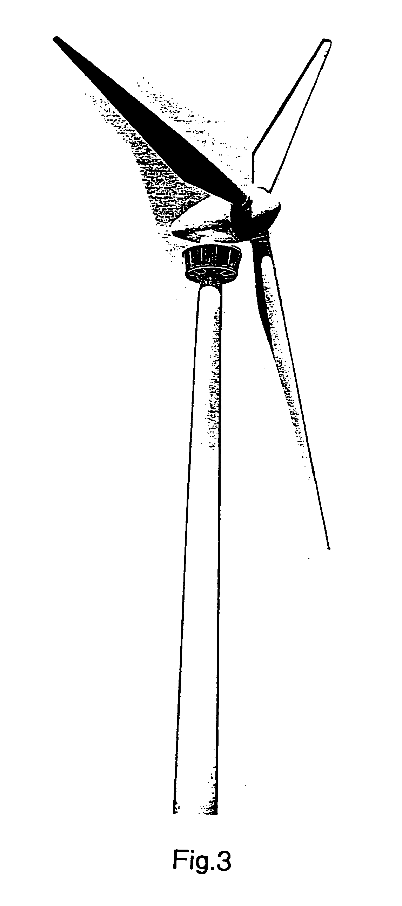

- Fig. 3: eine Ansicht einer Windenergieanlage mit einer Aussichtsplattform.

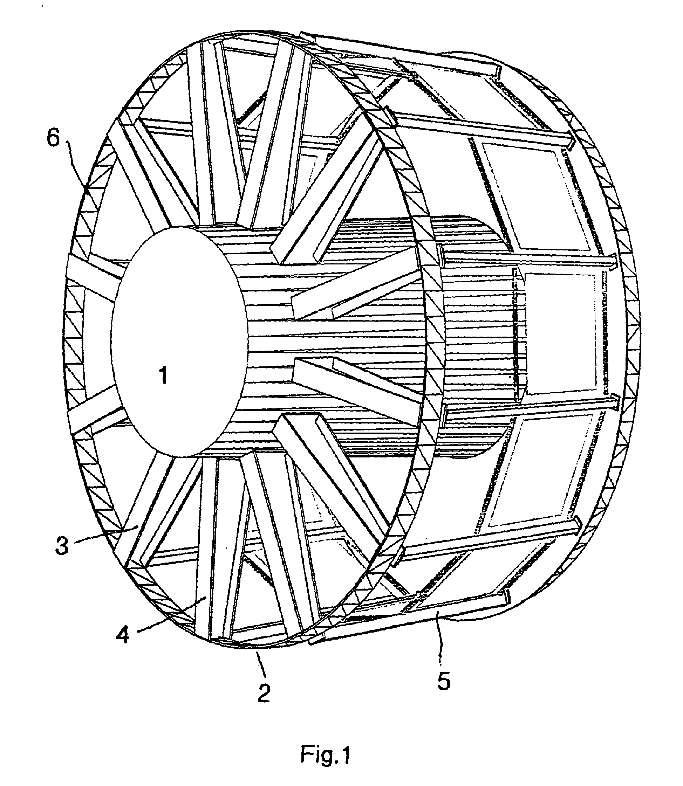

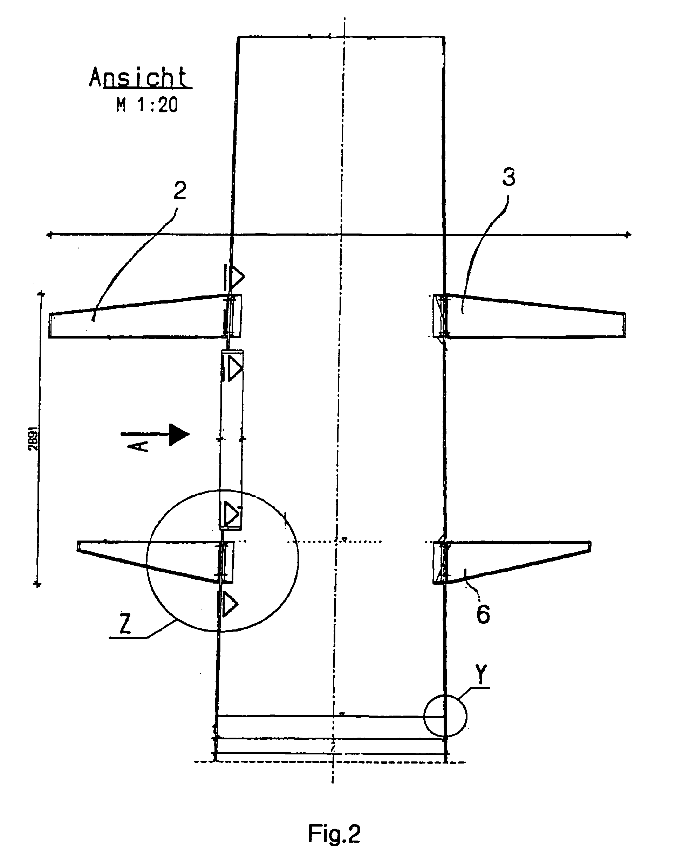

Fig. 1 zeigt den Turm 1 einer Windenergieanlage, an dem eine Aussichtsplattform 2 befestigt ist. Die Aussichtsplattform steht auf einer Tragkonstruktion, bestehend aus einer oberen Trägeranordnung 3 mit mehreren Tragarmen 4 und einer unteren Trägeranordnung (siehe Fig. 2) mit ebenfalls mehreren Trägerarmen. Einem Tragarm an der oberen Trägeranordnung ist hierbei vertikal darunter jeweils ein Tragarm der unteren Trägeranordnung zugeordnet und die vertikal übereinander liegenden Tragarme sind mittels Verbindungsstücke 5 verbunden. Zwischen den Verbindungsstücken sind Glaswände ausgeführt, die eine Aussicht aus der Aussichtsplattform erlauben. Die untere Trägeranordnung trägt den Boden der Aussichtsplattform, während die obere Trägeranordnung das Dach, inbesondere aus transparentem Material, trägt. Benachbarte Tragarme der oberen Trägeranordnung (ebenso wie benachbarte Tragarme der unteren Trägeranordnung) sind ebenfalls durch Verbindungsstücke 6 miteinander verbunden. Die Tragarme bestehen aus einem Doppel-T-Eisenprofil und sind mit dem Turm, welcher bevorzugt aus Stahl besteht, verschraubt.

Fig. 2 zeigt im Querschnitt die Trägerkonstruktion der Aussichtsplattform 2. Hierbei ist die obere Trägeranordnung 3 sowie die untere Trägeranordnung 6 zu erkennen. Im gezeigten Beispiel besteht jede Trägeranordnung aus zwölf gleichmäßig über den Umfang verteilten Tragarmen 4. Die Tragarme der oberen Trägeranordnung sind hierbei länger, (d.h. ihre Spitze ist weiter vom Turm entfernt) als die Länge der Tragarme der unteren Trägeranordnung. Dieses erlaubt es, die Fenster so geneigt in der Aussichtsplattform vorzusehen, dass dem Benutzer auch ein Blick direkt auf den Boden möglich ist, wenn nicht bereits der Boden selbst aus transparentem Material, z.B. Glas, gestaltet ist.

Die Zuwegung der Aussichtsplattform, welche den gesamten Turm umschließt, erfolgt durch eine Öffnung in der Turmwandung. So ist es möglich, einen Aufzug innerhalb des Turms vorzusehen, damit Benutzer bequem mit dem Aufzug die Aussichtsplattform erreichen können.

Die Größe der Aussichtsplattform ist so gestaltet, dass nur eine begrenzte Anzahl von Menschen sich dort aufhalten kann, so dass auch die Stabilität und die Halterung der Aussichtsplattform jederzeit gewährleistet ist. Zur Verstärkung der Halterung der Tragarme kann eine Verschweißen der Tragarme mit dem Turm oder auch die Ausbildung weiterer Halterungen vorgesehen werden.

Wird das Dach der Aussichtsplattform aus transparentem Material, z.B. Glas, gefertigt, so ist es dem Benutzer der Aussichtsplattform möglich, auch das Maschinenhaus und den Rotor mit seinen Rotorblättern oberhalb der Aussichtsplattform zu beobachten.

Zu besseren Information kann die Aussichtsplattform auch mit Meßgeräten ausgestattet sein, die dem Aussichtsplattformbenutzer weiteren Daten über die Windkraftanlage selbst oder andere Windkraftanlagen übermittelt. Solche Daten können auch die Winddaten an verschiedenen Stellen der Windenergieanlage sein, wie auch die Leistungsdaten etc.

Ist eine solche Windenergieanlage in einem Windpark untergebracht, so ist es sehr attraktiv, dass diese Windenergieanlage so innerhalb des Windparks steht, dass von der Aussichtsplattform alle Windenergieanlagen des Windparks zu beobachten sind.

Die gesamte Aussichtsplattform kann mit einer Schalldämmung versehen sein, so dass Außengeräusche, insbesondere die der Windenergieanlage, nur in geringem Umfang in die Aussichtsplattform eindringen, so dass dort auch eine Unterhaltung gut möglich ist. Selbstverständlich kann auch vorgesehen werden, damit sich der Besucher der Aussichtsplattform möglichst realen Verhältnissen stellt, keinerlei Schalldämmmaßnahmen vorzusehen, so dass der in Höhe der Aussichtsplattform vorbei rauschende Wind, wie auch die Geräusche der Windenergieanlage sowie deren Teile (insbesondere Generator) gut in der Aussichtsplattform wahrnehmbar sind.

Die Aussichtsplattform kann statt einer statischen Befestigung am Turm auch drehbar um den Turm gelagert sein, wozu dann ein motorischer Antrieb zur Drehung der Aussichtsplattform um den Turm vorgesehen ist.

Die Aussichtsplattform der Windenergieanlage kann auch zu Feuerbeobachtungszwecken verwendet werden. Hierbei stellt die erfindungsgemäße Lösung eine äußerst preiswerte Lösung dar, die nicht die separate Errichtung eines Feuerbeobachtungsturms benötigt. Da mittlerweile auch viele Windenergieanlagen im Binnenland aufgestellt werden, ist mit einer erfindungsgemäßen Windenergieanlage eine sehr effiziente Feuerbeobachtung in der heißen Jahreszeit möglich.

## Patentansprüche

1. Windenergieanlage mit einem Rotor, welcher mit einem Generator innerhalb eines Maschinenhauses gekoppelt ist,
**dadurch gekennzeichnet, dass** eine Aussichtsplattform unterhalb des Maschinenhauses am Turm (1) der Windenergienanlage angeordnet ist und mittels einer Tragkonstruktion am Turm der Windkraftanlage befestigt ist, wobei die Tragkonstruktion aus einer oberen Trägeranordnung (3) und einer unteren Trägeranordnung (6) besteht, wobei jede Trägeranordnung aus mehreren im Wesentlichen gleich gebildeten Tragarmen (4) besteht, die über den Umfang des Turms verteilt sind, dass die Aussichtsplattform den Turm im Wesentlichen völlig umschließt, daß die obere Tragarmanordnung (3) ein Dach der Aussichtsplattform trägt, dass die untere Tragarmkonstruktion einen Boden der Aussichtsplattform aufnimmt, dass die oberen wie auch die unteren Trägeranordnungen Halterungen für Fenster aufnehmen, die über den Umfang der Aussichtsplattform verteilt sind und dem Benutzer der Aussichtsplattform erlauben, bei Benutzung der Aussichtsplattform einen Rundumblick über die Landschaft zu gewähren.

2. Windenergieanlage nach Anspruch 1,
**dadurch gekennzeichnet, dass** die Tragarme der oberen Trägeranordnung länger sind als die Tragarme der unteren Trägeranordnung.

3. Windenergieanlage nach Anspruch 1 oder 2,
**dadurch gekennzeichnet, dass** die Tragarme mit dem Turm und der Windenergienanlage verschraubt und/oder verschweißt sind und der Turm im Bereich der Aussichtsplattform aus Stahl und/oder Beton (Stahlbeton) besteht.

4. Windenergieanlage nach einem der vorhergehenden Ansprüche,
**dadurch gekennzeichnet, dass** die untere und die obere Trägeranordnung jeweils aus zwölf Tragarmen bestehen, wobei einem oberen Tragarm vertikal darunter ein unterer Tragarm zugeordnet ist.

5. Windenergieanlage nach einem der vorhergehenden Ansprüche,
**dadurch gekennzeichnet, dass** die Zuwegung zur Aussichtsplattform aus einer Leiter, einer Treppe oder einem Aufzug innerhalb oder außerhalb des Turms besteht.

6. Windenergieanlage nach einem der vorhergehenden Ansprüche,
**dadurch gekennzeichnet, dass** der Abstand zwischen der Aussichtsplattform und dem Maschinenhaus der Windenergieanlage geringer ist als der Abstand zwischen der Rotorblattspitze eines Rotorblatts und der Rotorblattnabe.

7. Windenergieanlage nach einem der Ansprüche 1 bis 5,
**dadurch gekennzeichnet, dass** der Abstand der Aussichtsplattform zum Maschinenhaus größer ist, als der Abstand zwischen der Rotorblattspitze eines Rotorblatts und der Rotorblattnabe.

8. Windenergieanlage nach einem der vorhergehenden Ansprüche,
**dadurch gekennzeichnet, dass** die Fenster der Aussichtsplattform so geneigt sind, dass der obere Rand der Fenster weiter vom Turm entfernt liegt, als der untere Rand.

9. Windenergieanlage nach einem der vorhergehenden Ansprüche,
**dadurch gekennzeichnet, dass** die Aussichtsplattform drehbar um den Turm gelagert ist und bevorzugt durch einen motorischen Antrieb um den Turm drehbar ist.

10. Windenergieanlage nach einem der vorhergehenden Ansprüche,
**dadurch gekennzeichnet, daß** die Aussichtsplattform über eine akustische Schalldämmung verfügt, die das Eindringen von Außengeräuschen, insbesondere der von der Windenergieanlage erzeugten Geräusche weitestgehend verhindert.

11. Windpark mit einer Mehrzahl von Windenergieanlagen, wobei eine dieser Windenergieanlagen mit einer Aussichtsplattform nach einem der vorliegenden Ansprüche ausgestattet ist und diese Anlage mit der Aussichtsplattform innerhalb des Windparks von mehreren Windenergieanlagen eingeschlossen ist.

12. Windpark, insbesondere nach Anspruch 11,
**dadurch gekennzeichnet, dass** die Windenergieanlage mit der Aussichtsplattform so innerhalb des Windparks angeordnet ist, dass von der Aussichtsplattform die Mehrzahl der Windenergieanlagen des Windparks, vorzugsweise jede Windenergieanlage des Windparks zu sehen ist.

13. Feuerbeobachtungsturm,
**dadurch gekennzeichnet, dass** der Feuerbeobachtungsturm eine Windenergieanlage mit einer Aussichtsplattform nach einem der vorhergehenden Ansprüche ist.

## Claims

1. A wind power installation having a rotor which is coupled to a generator inside a machine house,
**characterised in that** an observation platform is disposed beneath the machine house on the tower (1) of the wind power installation and is attached to the tower of the wind power installation by means of a supporting structure, the supporting structure consisting of an upper support arrangement (3) and a lower support arrangement (6), each support arrangement consisting of a plurality of substantially identically formed supporting arms (4) which are distributed over the periphery of the tower, the observation platform surrounds the tower substantially completely, the upper supporting arm arrangement (3) supports a roof of the observation platform, the lower supporting arm structure supports a floor of the observation platform, the upper and the lower support arrangements receive mountings for windows which are distributed over the periphery of the observation platform and permit the user of the observation platform to have, when using the observation platform, a panoramic view over the landscape.

2. A wind power installation according to claim 1,
**characterised in that** the supporting arms of the upper support arrangement are longer than the supporting arms of the lower support arrangement.

3. A wind power installation according to claim 1 or 2,
**characterised in that** the supporting arms are bolted and/or welded to the tower and the wind power installation, and the tower consists of steel and/or concrete (reinforced concrete) in the region of the observation platform.

4. A wind power installation according to any one of the preceding claims,
**characterised in that** the lower and the upper support arrangement each consist of twelve supporting arms, wherein associated with an upper supporting arm vertically therebeneath is a lower supporting arm.

5. A wind power installation according to any one of the preceding claims, **characterised in that** the access to the observation platform consists of a ladder, a flight of stairs or a lift inside or outside the tower.

6. A wind power installation according to any one of the preceding claims, **characterised in that** the distance between the observation platform and the machine house of the wind power installation is smaller than the distance between the rotor blade tip of a rotor blade and the rotor blade hub.

7. A wind power installation according to any one of claims 1 to 5,
**characterised in that** the distance of the observation platform from the machine house is greater than the distance between the rotor blade tip of a rotor blade and the rotor blade hub.

8. A wind power installation according to any one of the preceding claims,
**characterised in that** the windows of the observation platform are so inclined that the upper edge of the windows is further away from the tower than is the lower edge.

9. A wind power installation according to any one of the preceding claims, **characterised in that** the observation platform is mounted to be rotatable about the tower and is rotatable about the tower preferably by a motor drive.

10. A wind power installation according to any one of the preceding claims, **characterised in that** the observation platform has acoustic sound insulation which very substantially prevents the entry of external noises, especially the noises produced by the wind power installation.

11. A wind farm having a plurality of wind power installations, wherein one of those wind power installations is provided with an observation platform according to any one of the present claims and that installation with the observation platform is surrounded within the wind farm by a plurality of wind power installations.

12. A wind farm, especially according to claim 11,
**characterised in that** the wind power installation with the observation platform is so arranged within the wind farm that the majority of wind power installations of the wind farm, preferably each wind power installation of the wind farm, is to be seen from the observation platform.

13. A fire observation tower,
**characterised in that** the fire observation tower is a wind power installation with an observation platform according to any one of the preceding claims.

## Revendications

1. Eolienne avec un rotor, lequel est couplé à un générateur à l'intérieur d'une salle des machines,
**caractérisée en ce qu'**une plateforme panoramique est disposée à l'intérieur de la salle des machines sur la tour (1) de l'éolienne et est fixée à la tour de l'éolienne au moyen d'une construction porteuse, la construction porteuse se composant d'une installation porteuse supérieure (3) et d'une installation porteuse inférieure (6), chaque installation porteuse se composant de plusieurs bras porteurs (4) constitués de manière essentiellement identique, qui sont répartis sur la périphérie de la tour, **en ce que** la plateforme panoramique entoure complètement la tour pour l'essentiel, **en ce que** l'installation porteuse supérieure (3) porte un toit de la plateforme panoramique, **en ce que** la construction porteuse inférieure loge un plancher de la plateforme panoramique, **en ce que** les installations porteuses supérieure et inférieure logent des supports pour fenêtres, qui sont répartis sur la périphérie de la plateforme panoramique et qui permettent à l'utilisateur de la plateforme panoramique de jouir, lors de l'utilisation de la plateforme panoramique, d'une vue panoramique sur le paysage.

2. Eolienne selon la revendication 1,
**caractérisée en ce que** les bras porteurs de l'installation porteuse supérieure sont plus longs que les bras porteurs de l'installation porteuse inférieure.

3. Eolienne selon la revendication 1 ou 2, **caractérisée en ce que** les bras porteurs sont vissés et/ou soudés à la tour et à l'éolienne et que la tour est dans la zone de la plateforme panoramique, en acier et/ou en béton (béton armé).

4. Eolienne selon l'une quelconque des revendications précédentes,
**caractérisée en ce que** les installations porteuses supérieure et inférieure se composent respectivement de douze bras porteurs, un bras porteur inférieur étant affecté à un bras porteur supérieur verticalement en dessous.

5. Eolienne selon l'une quelconque des revendications précédentes,
**caractérisée en ce que** l'accès à la plateforme panoramique se compose d'une échelle, d'un escalier ou d'un ascenseur à l'intérieur ou à l'extérieur de la tour.

6. Eolienne selon l'une quelconque des revendications précédentes,
**caractérisée en ce que** la distance entre la plateforme panoramique et la salle des machines de l'éolienne est plus faible que la distance entre la pointe de la pale de rotor d'une pale de rotor et le moyeu de la pale de rotor.

7. Eolienne selon l'une quelconque des revendications 1 à 5,
**caractérisée en ce que** la distance de la plateforme panoramique à la salle des machines est plus grande que la distance entre la pointe de la pale de rotor d'une pale de rotor et le moyeu de la pale de rotor.

8. Eolienne selon l'une quelconque des revendications précédentes,
**caractérisée en ce que** les fenêtres de la plateforme panoramique sont inclinées de façon à ce que le bord supérieur des fenêtres se trouve plus éloigné de la tour que le bord inférieur.

9. Eolienne selon l'une quelconque des revendications précédentes,
**caractérisée en ce que** la plateforme panoramique est logée de manière à pouvoir tourner autour de la tour et peut être amenée à tourner autour de la tour de préférence avec un entraînement à moteur.

10. Eolienne selon l'une quelconque des revendications précédentes,
**caractérisée en ce que** la plateforme panoramique dispose d'une isolation sonore acoustique, qui empêche largement la pénétration de bruits extérieurs, en particulier des bruits produits par l'éolienne.

11. Parc éolien avec une pluralité d'éoliennes, une de ces éoliennes étant équipée d'une plateforme panoramique selon l'une quelconque des revendications présentes, et cette éolienne avec la plateforme panoramique étant incluse à l'intérieur du parc éolien constitué de plusieurs éoliennes.

12. Parc éolien, en particulier selon la revendication 11,
**caractérisé en ce que** l'éolienne avec la plateforme panoramique est disposée à l'intérieur du parc éolien de façon à ce que l'on puisse voir depuis la plateforme panoramique la pluralité des éoliennes du parc éolien, de préférence chaque éolienne du parc éolien.

13. Tour de surveillance d'incendie,
**caractérisée en ce que** la tour de surveillance d'incendie est une éolienne avec une plateforme panoramique selon l'une quelconque des revendications précédentes.
